# EUROPÄISCHE PATENTANMELDUNG

(11) **EP 0 522 354 A1**
(43) Veröffentlichungstag der Anmeldung: **13.01.1993**
(21) Anmeldenummer: 92110621.7
(22) Anmeldetag: 24.06.1992
(51) Int. Cl.: B07C 3/14, B60C 13/00

(54) **Verfahren und Vorrichtung zur Identifizierung von Reifen**

(30) Priorität: 06.07.1991 DE 4122438
(71) Anmelder: LOHWASSER ELEKTROTECHNIK GMBH, D-64750 Lützelbach (DE)
(72) Erfinder: Lohwasser, Walter, W-6129 Lützelbach 5 (DE)
(74) Vertreter: Gornott, Dietmar, Dipl.-Ing.

(57) **Zusammenfassung**

Bei einem Verfahren und bei einer Vorrichtung zur Identifizierung von Reifen (5) wird auf dem Laufstreifen (1) ein maschinenlesbarer optischer Code (2) aufgebracht, vorzugsweise auf den noch nicht mit der Karkasse verbundenen Laufstreifen (1). Dadurch ist eine einwandfreie automatische Erkennung der verschiedenen Reifenarten während des Fertigungsablaufs möglich.

## Beschreibung

Die Erfindung betrifft ein Verfahren und eine Vorrichtung zur Identifizierung von Reifen.

Zur Erzielung eines reibungslosen Arbeitsablaufs bei der Herstellung von Reifen ist eine zuverlässige Identifizierung von Rohlingen und fertigen Reifen erforderlich. Durch die visuelle Identifizierung durch die mit der Fertigung beauftragten Personen, sind Fehler jedoch nicht auszuschließen.

Aufgabe der vorliegenden Erfindung ist es daher, eine zuverlässige maschinelle Identifizierung von Rohlingen und Reifen zu ermöglichen.

Das erfindungsgemäße Verfahren ist dadurch gekennzeichnet, daß auf dem Laufstreifen ein maschinenlesbarer optischer Code aufgebracht wird und hat unter anderem den Vorteil, daß bereits beim Einbringen in die Preßform eine selbsttätige Kontrolle möglich ist, ob der Rohling in die richtige Preßform eingebracht wird.

Vorzugsweise wird der Code auf den noch nicht mit der Karkasse verbundenen Laufstreifen aufgebracht. Damit wird sogar bereits eine Identifizierung des Laufstreifens vor der Verbindung mit der Karkasse möglich.

Geeignete Lacke, welche temperaturbeständig sind und den Reifen nicht in seinen Eigenschaften beeinträchtigen, sind verfügbar. Bei geeigneter Konsistenz und Haftfähigkeit verteilt sich die Lackschicht bei der Formung des Profils im wesentlichen gleichmäßig über die Oberfläche außerhalb und innerhalb der Profilrillen.

Der Code kann in normaler sichtbarer Farbe aufgebracht sein. Sollte diese jedoch stören, kann gemäß einer Weiterbildung der Erfindung der Code mit einer Farbe, die Farbpigmente im UV- oder IR-Bereich enthält, aufgebracht werden.

Wenn gemäß einer anderen Weiterbildung der Erfindung der Code durch Abtasten in Umfangsrichtung des Reifens lesbar ist, ist eine Erkennung des Reifens durch Drehen gegenüber einer festen Leseeinrichtung leicht möglich.

Gemäß einer anderen Weiterbildung der Erfindung ist vorgesehen, daß mindestens drei sich in Umfangsrichtung erstreckende Reihen von Markierungen vorgesehen sind, daß jeweils einer Reihe ein ortsfest angeordnetes Abtastelement zugeordnet ist und daß die Markierungen einer ersten und einer dritten Reihe die abzutastende Information enthalten und die Markierungen einer zweiten Reihe in Umfangsrichtung gegenüber den Markierungen der ersten und der dritten Reihe versetzt angeordnet und unabhängig von der jeweiligen Information vorhanden sind.

Eine vorteilhafte Ausgestaltung dieser Weiterbildung besteht darin, daß die Markierungen von jeweils zwei im wesentlichen senkrecht zur Umfangsrichtung verlaufenden Rändern begrenzt sind und daß die Markierungen der zweiten Reihe derart gegenüber den Markierungen der ersten und der dritten Reihe versetzt sind, daß in Umfangsrichtung gesehen jeweils eine Markierung der zweiten Reihe einen der Ränder der Markierungen der ersten und der dritten Reihe umfaßt.

Durch diese Weiterbildung ist ein Lesen des Codes in beiden Richtungen möglich. Dabei kann der Code sogar vor der Leseeinrichtung vorübergehend stehenbleiben oder rückwärts bewegt werden. Sobald der ganze Code an der Leseeinrichtung vorbeigeführt ist, wird der Code erkannt. Einzelheiten dazu sind in der Offenlegungsschrift 39 00 978 angegeben.

Eine andere Weiterbildung besteht darin, daß die Markierungen im wesentlichen rechteckig sind. Dadurch wird ermöglicht, daß die bei der Abtastung des Codes gewonnenen Signale innerhalb eines vorgegebenen Bereichs unabhängig von einer seitlichen Verschiebung des Codes sind. Zusätzlich zum Erkennen des Codes in beiden Abtastrichtungen kann es erforderlich sein, den Code auch unabhängig davon zu lesen, ob die Markierungen der ersten Reihe in bezug auf die Leseeinrichtung oben oder unten liegen. Dieses wird dadurch ermöglicht, daß die erste Reihe in einer Richtung um ein Loch länger als die dritte Reihe ist und daß die dritte Reihe in der anderen Richtung um ein Loch länger als die erste Reihe ist.

Gemäß einer vorteilhaften Ausführungsform der Erfindung ist vorgesehen, daß die Markierungen größer als die größten im Bereich des aufgebrachten Codes vorgesehenen Profilrillen sind. Damit lassen sich durch Profilrillen bedingte Störungen vermeiden. Außerdem sind größere Abweichungen bei der Aufbringung des Codes, bei der Justierung der Leseeinrichtung sowie in bezug auf mögliche Verformungen des Reifens zwischen dem Aufbringen des Codes und dem jeweiligen Lesevorgang möglich. Als günstig hat sich eine Seitenlänge von etwa 8mm bis 10mm herausgestellt.

Eine vorteilhafte Vorrichtung zum Lesen eines Codes nach dem erfindungsgemäßen Verfahren weist eine Einrichtung zum Drehen des Reifens und eine feststehende Beleuchtungs- und Abtasteinrichtung auf. Vorzugsweise enthält die Vorrichtung zum Drehen des Reifens Mittel zur zusätzlichen Bewegung des Reifens in axialer Richtung. Dadurch ist ein Erkennen auch von solchen Codes möglich, deren axiale Lage auf dem Laufstreifen nicht festgelegt ist.

Eine vorteilhafte Ausführungsform dieser Vorrichtung besteht darin, daß jeweils ein Reifen zwischen zwei axial beweglichen Drehteller einspannbar ist, wobei der eine Drehteller mittels einer zugeführten Kraft, vorzugsweise mit einem Hubzylinder, in Richtung auf den Reifen bewegbar ist und der andere Drehteller mit einem Rotationsantrieb und mit einer axial wirksamen Feder versehen ist.

Ausführungsbeispiele der Erfindung sind in der Zeichnung anhand mehrerer Figuren dargestellt und in der nachfolgenden Beschreibung näher erläutert. Es zeigt:
- Fig. 1: einen auf einem Laufstreifen aufgebrachten Code,
- Fig. 2: einen Reifen mit einem Code,
- Fig. 3: ein Blockschaltbild einer Leseeinrichtung und
- Fig. 4: eine schematische Darstellung einer Lesestation.

Gleiche Teile sind in den Figuren mit gleichen Bezugszeichen versehen.

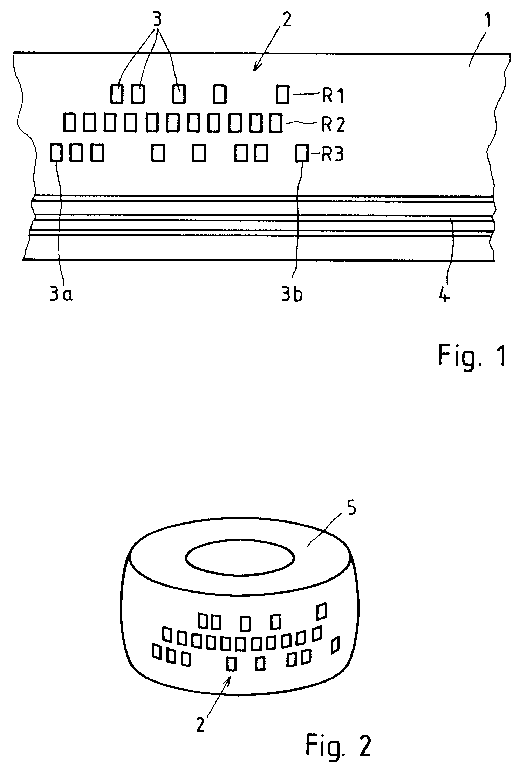

Fig. 1 zeigt einen Laufstreifen 1, auf welchen ein Code 2 aufgebracht ist, der aus drei Reihen R1, R2, R3 rechteckiger Farbmarkierungen 3 gebildet ist. Die Markierungen der mittleren Reihe R2 sind unabhängig von der jeweiligen Information vollständig vorhanden. Bei dem Ausführungsbeispiel sind dieses 11 Markierungen. In den Reihen R1 und R3 sind jeweils ebenfalls 11 Positionen vorgesehen. In jeweils einer Position befindet sich jedoch nur eine Markierung entweder in der Reihe R1 oder in der Reihe R3. Dabei ist die Information derart codiert, daß eine Markierung in der Reihe R1 beispielsweise eine 1 darstellt, während eine Markierung in der Reihe R3 eine 0 bedeutet. Es kann demnach mit dem in Fig. 1 gezeigten Code eine 11-stellige Binärzahl mit insgesamt 2048 verschiedenen Werten dargestellt werden. Zum Lesen des Codes werden die Reifen mit jeweils einem Sensor in Umfangsrichtung des Reifens abgetastet.

Eine der äußeren Reihen - bei Fig. 1 die Reihe R3 - ist an den Enden mit weiteren Markierungen 3a und 3b versehen. Daraus kann erkannt werden, welche der Reihen Einsen bzw. Nullen darstellt. Dadurch wird eine Identifizierung des Reifens unabhängig davon möglich, auf welcher Seite er liegt.

Die Markierungen der mittleren Reihe R2 sind gegenüber den Markierungen der Reihen R1 und R3 versetzt angeordnet. Dadurch wird eine Auswerteeinrichtung ermöglicht, dasjenige Signal auszuwerten, das durch die Abtastung eines vorgegebenen Randes der Markierungen der Reihen R1 und R3 entsteht - bei dem Beispiel gemäß Fig. 1 diejenige Signalflanke, die durch das Abtasten des linken Randes entsteht. Diese Signalflanke ändert jedoch mit der Bewegungsrichtung bzw. Abtastrichtung ihre Polarität, so daß ein Erkennen der Bewegungsrichtung möglich wird. Wie in der Offenlegungsschrift 39 00 978 ausführlich erläutert ist, kann ein derartiger Code auch dann gelesen werden, wenn die Bewegung der Abtasteinrichtung längs des Codes unterbrochen wird oder ihre Richtung umkehrt. Der Code wird immer dann richtig gelesen, wenn nach dem Beginn des Abtastvorgangs an einem Ende des Codes der Abtastvorgang an dem anderen Ende beendet wird.

Außer dem Code für das erfindungsgemäße Verfahren können auf dem Laufstreifen 1 noch weitere Kennzeichen angebracht sein, beispielsweise an sich bekannte farbige Kennstreifen 4.

Fig. 2 zeigt den Code 2 auf einem Reifen 5, auf welchen zuvor der Laufstreifen 1 (Fig. 1) mit dem Code 2 aufgebracht wurde.

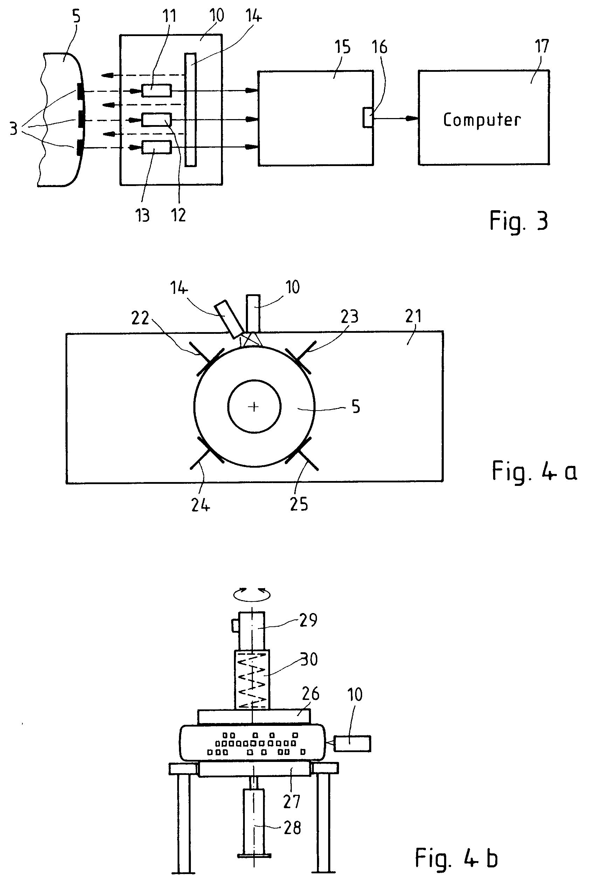

Bei dem Blockschaltbild gemäß Fig. 3 ist schematisch ein Teil des Reifens 5 mit Markierungen 3 dargestellt. Eine Abtasteinheit 10 umfaßt unter anderem drei Abtastelemente 11, 12, 13, welche auf jeweils eine der Markierungen 3 gerichtet sind. Ferner ist eine Beleuchtungseinrichtung 14 vorgesehen, welche die abzutastende Oberfläche des Reifens 5 beleuchtet.

Die von den Abtastelementen abgegebenen elektrischen Signale werden einer Auswerteeinheit 15 zugeführt, die der in der Offenlegungsschrift 39 00 978 ausführlich beschriebenen im wesentlichen entspricht. Über eine geeignete Schnittstelle 16 werden die decodierten Informationen, also eine Code-Nummer des Reifens 5 in einen Computer 17 übertragen, der den Fertigungsablauf steuert. Für die weitere Verarbeitung der gelesenen Code-Nummern ist im Computer 17 unter anderem eine Reifentypendatei abgelegt, in welcher die Zuordnung zwischen den verschiedenen Code-Nummern und den Reifentypen hinterlegt ist.

Fig. 4a und 4b zeigen eine Lesestation zum Lesen der bereits auf den Reifen befindlichen Codes in zwei Ansichten. Der Reifen 5 wird auf einer nicht dargestellten Fördereinrichtung an die Lesestation herangeführt und auf einem Tisch 21 abgelegt. Mit Hilfe von an sich bekannten Mitteln wird der Reifen zentriert. Dieses kann beispielsweise durch vier verschiebbare Backen 22, 23, 24, 25, die miteinander verbunden sind, erfolgen. Der Reifen wird dann zwischen zwei Drehtellern 26, 27 dadurch eingespannt, daß der untere Drehteller 27 durch einen Hubzylinder 28 nach oben gedrückt wird.

Der Drehteller 26 ist mit einem Antrieb 29 versehen und wird in Drehbewegung versetzt, so daß sich der Reifen ebenfalls dreht. Zu Beginn der Drehbewegung liegt der Reifen derart tief, daß die Markierungen 3 unterhalb der Abtasteinheit 10 liegen. Der Hubzylinder 28 hebt jedoch gegen den Druck einer Feder 30 den Reifen 5 allmählich hoch, so daß die Markierungen 3 in den Lesebereich der Abtasteinrichtung 10 gelangen und die Codierung gelesen wird. Damit ist ein einwandfreies Lesen der Codierung auch dann möglich, wenn die Lage des Codes auf dem Reifen nicht festgelegt ist.

Alternativ zur Lesestation nach Fig. 4a und 4b kann die Abtasteinrichtung, erforderlichenfalls mit einer Beleuchtungseinrichtung, als Handlesegerät ausgeführt sein, das über den zu lesenden Code hinweggeführt wird. Die Einrichtung zum Drehen des Reifens kann dann entfallen.

## Patentansprüche

1. Verfahren zur Identifizierung von Reifen, dadurch gekennzeichnet, daß auf dem Laufstreifen ein maschinenlesbarer optischer Code aufgebracht wird.

2. Verfahren nach Anspruch 1, dadurch gekennzeichnet, daß der Code auf den noch nicht mit der Karkasse verbundenen Laufstreifen aufgebracht wird.

3. Verfahren nach einem der vorhergehenden Ansprüche, dadurch gekennzeichnet, daß der Code mit UV- oder IR-Farbe aufgebracht wird.

4. Verfahren nach einem der vorhergehenden Ansprüche, dadurch gekennzeichnet, daß der Code durch Abtasten in Umfangsrichtung des Reifens lesbar ist.

5. Verfahren nach Anspruch 4, dadurch gekennzeichnet, daß mindestens drei sich in Umfangsrichtung erstreckende Reihen von Markierungen vorgesehen sind, daß jeweils einer Reihe ein ortsfest angeordnetes Abtastelement zugeordnet ist und daß die Markierungen einer ersten und einer dritten Reihe die abzutastende Information enthalten und die Markierungen einer zweiten Reihe in Umfangsrichtung gegenüber den Markierungen der ersten und der dritten Reihe versetzt angeordnet und unabhängig von der jeweiligen Information vorhanden sind.

6. Verfahren nach Anspruch 5, dadurch gekennzeichnet, daß die Markierungen von jeweils zwei im wesentlichen senkrecht zur Umfangsrichtung verlaufenden Rändern begrenzt sind und daß die Markierungen der zweiten Reihe derart gegenüber den Markierungen der ersten und der dritten Reihe versetzt sind, daß in Umfangsrichtung gesehen jeweils eine Markierung der zweiten Reihe einen der Ränder der Markierungen der ersten und der dritten Reihe umfaßt.

7. Verfahren nach Anspruch 6, dadurch gekennzeichnet, daß die Markierungen im wesentlichen rechteckig sind.

8. Verfahren nach Anspruch 6, dadurch gekennzeichnet, daß die erste Reihe in einer Richtung um ein Loch länger als die dritte Reihe ist und daß die dritte Reihe in der anderen Richtung um ein Loch länger als die erste Reihe ist.

9. Verfahren nach einem der vorhergehenden Ansprüche, dadurch gekennzeichnet, daß die Markierungen größer als die größten im Bereich des aufgebrachten Codes vorgesehenen Profilrillen sind.

10. Verfahren nach Anspruch 9, dadurch gekennzeichnet, daß die Markierungen eine Seitenlänge von etwa 8mm bis 10mm aufweisen.

11. Vorrichtung zum Lesen eines Codes nach dem erfindungsgemäßen Verfahren, gekennzeichnet durch eine Einrichtung (26, 27) zum Drehen des Reifens (5) und durch eine feststehende Beleuchtungs- und Abtasteinrichtung (10, 14).

12. Vorrichtung nach Anspruch 11, dadurch gekennzeichnet, daß die Vorrichtung zum Drehen des Reifens Mittel (28) zur zusätzlichen Bewegung des Reifens (5) in axialer Richtung enthält.

13. Vorrichtung nach Anspruch 12, dadurch gekennzeichnet, daß jeweils ein Reifen (5) zwischen zwei axial beweglichen Drehtellern (26, 27) einspannbar ist, wobei der eine Drehteller (27) mittels einer zugeführten Kraft, vorzugsweise mit einem Hubzylinder (28), in Richtung auf den Reifen (5) bewegbar ist und der andere Drehteller (26) mit einem Rotationsantrieb (29) und mit einer axial wirksamen Feder (30) versehen ist.
